(19) Europäisches Patentamt
European Patent Office
Office européen des brevets

(11) Publication number: **0 273 432 A2**

(12) **EUROPEAN PATENT APPLICATION**

(21) Application number: **87119275.3**

(22) Date of filing: **28.12.87**

(51) Int. Cl.⁴: **C07C 131/105**, C07C 153/017, A01N 37/52

(30) Priority: **29.12.86 JP 315443/86**

(43) Date of publication of application: **06.07.88 Bulletin 88/27**

(84) Designated Contracting States: **AT BE CH DE ES FR GB GR IT LI NL SE**

(71) Applicant: **MITSUBISHI PETROCHEMICAL CO., LTD.**
**5-2, 2-chome, Marunouchi**
**Chiyoda-ku Tokyo 100(JP)**

(72) Inventor: **Goh, Atsushi**
**1977-7, Kosaka-machi**
**Ushiku-shi Ibaraki-ken(JP)**
Inventor: **Endo, Keiji**
**1-11-5-203, Chuo Ami-machi**
**Inashiki-gun Ibaraki-ken(JP)**
Inventor: **Yamamoto, Yuri**
**1-11-5-204, Chuo Ami-machi**
**Inashiki-gun Ibaraki-ken(JP)**

(74) Representative: **Kraus, Walter, Dr. et al**
**Patentanwälte Kraus, Weisert & Partner**
**Thomas-Wimmer-Ring 15**
**D-8000 München 22(DE)**

(54) **2-Nitro-5-(substituted phenoxy) benzohydroximate derivatives and their use as herbicide.**

(57) A compound of the formula

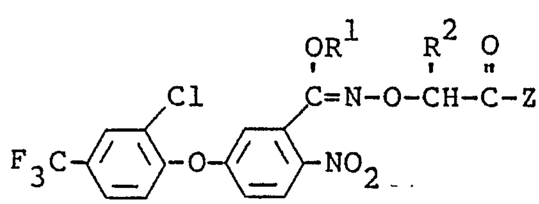

(I)

wherein $R^1$ represents a lower alkyl group, $R^2$ represents a hydrogen atom or a lower alkyl group, and Z represents a group of the formula $-OR^3$ or $-SR^4$ in which $R^3$ represents a lower alkenyl or alkynyl group which may be substituted by halogen, cyano or lower alkoxycarbonyl, and $R^4$ represents a lower alkyl group. The above compound is produced by (a) reacting an ester-forming derivative of a compound of the formula

**EP 0 273 432 A2**

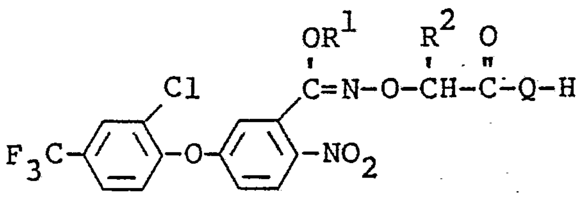

(II)

wherein $R^1$ and $R^2$ are as defined above, and
Q represents an oxygen or sulfur atom,
with a compound of formula

Z-H (III)

wherein Z is as defined above, or (b) reacting the compound of formula (II) with a compound of the formula

$R^3X^1$ or $R^4X^1$ (IV)

wherein $R^3$ and $R^4$ are as defined above, and
$X^1$ represents a halogen atom, or (c) reacting a compound of the formula

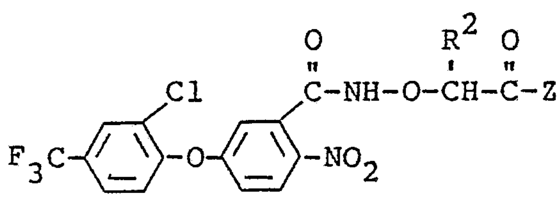

(V)

wherein $R^2$ and Z are as defined above,
with a compound of the formula

$R^1$-$X^2$ (VI)

wherein $R^1$ is as defined above, and
$X^2$ represents an acid residue,
or diazomethane. This compound is useful as a herbicide.

This invention relates to novel 2-nitro-5-(substituted phenoxy)benzohydroximic acid derivatives, and more specifically, to compounds represented by the following formula

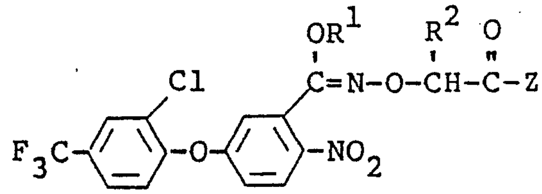

(I)

wherein

$R^1$ represents a lower alkyl group,

$R^2$ represents a hydrogen atom or a lower alkyl group, and

Z represents a group of the formula $-OR^3$ or $-SR^4$ in which $R^3$ represents a lower alkenyl or alkynyl group which may be substituted by halogen, cyano or lower alkoxycarbonyl, and $R^4$ represents a lower alkyl group; processes for producing the above compounds, and use of these compounds as herbicides.

The novel benzohydroximic acid derivatives of formula (I) have very superior herbicidal activity against weeds, and exhibit their effects in the preemergence period and in the growth period after emergence, most strongly in the growth period of weeds.

European Patent Application EP-A-155613 discloses diphenyl ether oxime ester derivatives of the following general formula (A)

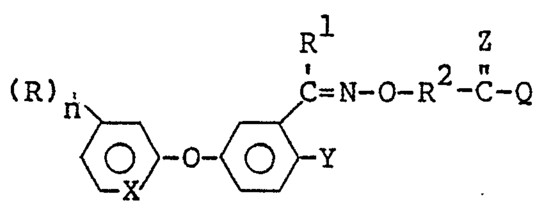

...(A)

Broad definitions are given to the substituents R, $R^1$ $R^2$, Q, X, Y and Z in formula (A), and include cases where X is CH, R is halogen and haloalkyl, Y is $NO_2$, $R^2$ is $C_1$ alkylene that may be substituted by alkyl, and Z is an oxygen atom. However, when Q in formula (A) is $-OR^3$, the definition of $R^3$ cannot include the optionally substituted alkenyl or alkynyl group defined in the present invention for $R^3$ in $OR^3$ given to Z in the compounds of formula (I). Furthemore, when Q in formula (A) is $-SR^3$, the definition of $R^3$ does not include the lower alkyl group defined in this invention for $R^4$ in $SR^4$ given to Z in the compounds of formula (I). This European Patent Application suggests briefly that compounds of formula (A) in which Q is $SR^3$ and $R^3$ is a lower alkyl group would be intermediates for synthesis of compounds of formula (A) in which Q is $-SR^3$, but quite fails to give any specific examples of such intermediate compounds.

Furthermore, this European Patent Application shows no specific examples of compounds of formula (A) wherein $R^1$ is an alkoxy group or a substituted alkoxy group and of their synthesis. In the synthesized compounds of formula (A) shown in this patent document, $R^1$ is only a methyl group. The specification merely give alkyl or haloalkyl groups as preferred examples of $R^1$. This patent document further states generally that the compounds of formula (A) have herbicidal activity, but gives no specific data from which their herbicidal activity can be determined.

U. S. Patents Nos. 4,344,289 and 4,564,385 disclose compounds of the following formula (B)

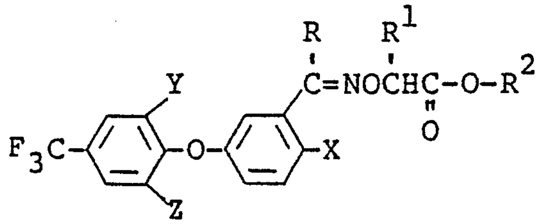

...(B)

and states that the compounds of formula (B) have herbicidal activity. But $R^2$ in formula (B) does not include the optionally substituted alkenyl or alkynyl group defined in the compounds (I) of the present invention for $R^3$ in $OR^3$ which is given to Z.

The above-cited European Patent Application and U. S. Patents do not at all refer to the compounds of formula (I) provided by this invention, processes for their production and their herbicidal activity, and quite fail to suggest any possibility of creating the compounds of formula (I) or the utility of such compounds.

Use of herbicides is essential to protect important crops including corn, soybean, wheat, rice, cotton and beet from weeds and to increase the amount of crop harvest. The herbicides are desirably those of the foliage-contacting type which can be applied after emergence according to the type and amount of weeds to be controlled and in reduced dosage in contrast to those of the soil-treating type which are applied before emergence.

The foliage-contacting type herbicides are required to have very high selectivity because they also make contact with crops. Thus, very few foliage-contacting type herbicides have been developed although many herbicides of the soil-treating type have been synthesized.

Foliage-contacting type herbicides now used in soybean farms include, for example, 3-isopropyl-1H-2,1,3-benzothiadiazin(4)-3H-one-2,2-dioxide (bentazone) which is of the diazine type and sodium 5-(2-chloro-4-trifluoromethylphenoxy)-2-nitrobenzoate (acifluorfen sodium) which is of the diphenyl ether type. These herbicides, however, have not proved to be entirely satisfactory in herbicidal activity and herbicidal spectrum, and it has been desired to develop more effective foliage-contacting type herbicides.

The present inventors made extensive investigations in order to develop diphenyl ether-type herbi cides which would be able to overcome the aforesaid technical problems of diphenyl ether-type herbicides of the foliage-treating type, to be applied at reduced rates of application, and to have a broad herbicidal spectrum and good selectivity in post-emergence application to useful crops.

These investigations led to the discovey that novel herbicidally active compounds of formula (I) given above can be synthesized; that these compounds can overcome the technical problems of the prior art and shows a broad range of herbicidal activity and excellent selective herbicidal activity in reduced dosage; and that these herbicidal compounds can exhibit their excellent characteristics in, for example, soil treatment and foliar treatment, particularly the latter.

It is an object of this invention therefore to provide 2-nitro-5-(substituted phenoxy)benzohydroximic acid derivatives of formula (I) given above.

Another object of this invention is to provide processes for producing the compounds of formula (I).

Still another object of this invention is to provide a herbicide comprising a compound of formula (I) as an active ingredient.

The diphenyl ether derivatives of formula (I) provided by this invention are novel compounds not described in the literature. They are characterized in that the hydroximic acid moiety specified in formula (I) which is different from that in the known compounds is attached to the nitro group-containing phenyl ring (to be sometimes referred to as the B ring) of the diphenyl ether derivatives of formula (I) at a position ortho to the nitro group. This structural characteristic is believed to contribute to the excellent herbicidal activity of the diphenyl ether derivatives of formula (I).

The compounds of formula (I) provided by this invention have excellent characteristics that cannot be expected from the prior art. They have selectivity for useful crops including rice, corn, wheat, barley, sorghum and soybean and a broad herbicidal spectrum and can exhibit their herbicidal activity sufficiently in very low dosage as compared with ordinary herbicides.

The term "lower", used in the present specification and the appended claims to qualify a group or a compound, means that the group or compound so qualified has not more than 6 carbon atoms, preferably not more than 4 carbon atoms.

In the definitions of the substituents in formula (I), the "lower alkyl" may be linear or branched, and includes, for example, methyl, ethyl, n-propyl, iso-propyl, n-butyl, sec-butyl, iso-butyl, n-pentyl, sec-pentyl and n-hexyl. The "lower alkenyl" may have a branched chain, and examples include vinyl, allyl, methallyl and crotyl. The "lower alkynyl" includes, for example, propargyl and 2-butynyl.

The "halogen atom" includes fluorine, chlorine, bromine and iodine atoms, and chlorine is preferred. The "lower alkoxycarbonyl" is the (lower alkyl)-O-CO-group in which the lower alkyl moiety has the above meaning. Examples are methoxycarbonyl, ethoxycarbonyl, n-propoxycarbonyl, i-propoxycarbonyl and n-butoxycarbonyl.

In the compounds of formula (I) provided by this invention, $R^1$ is preferably methyl, and $R^2$ is preferably hydrogen. $R^3$ is preferably allyl or propargyl and $R^4$ is preferably $C_{1-3}$ alkyl.

Among the compounds given in Table 1 hereinbelow, compounds Nos. 1, 4, 12 and 23 are especially preferred.

The compounds of formula (I) have one asymmetric carbon atom and may exist in a levorotatory, dextrorotatory or racemic form. The compounds of formula (I) include two stereoisomers (syn-form and anti-form) of formulae (I-a) and (I-b). It should be understood that the formula (I) includes both of these stereoisomers.

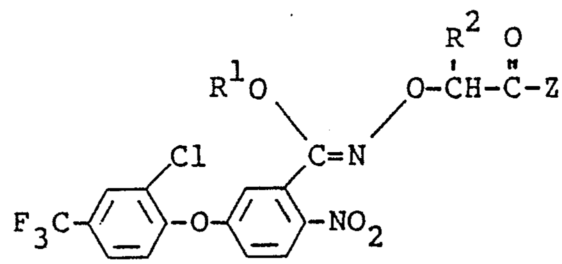

(I-a)

(syn-form)

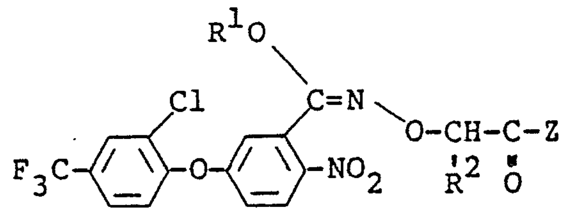

(I-b)

(anti-form)

Hardly any difference is seen in herbicidal activity between the two stereoisomers, but syn-form stereoisomers are believed to be preferred in regard to mutagenicity.

The compounds of formula (I) may be produced, for example, by

(a) reacting an ester-forming derivative of a compound of the formula

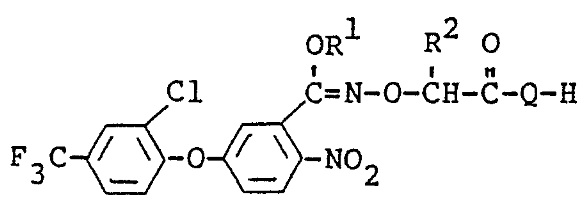

(II)

wherein $R^1$ and $R^2$ are as defined above, and

Q represents an oxygen or sulfur atom, with a compound of formula

Z-H (III)

wherein Z is as defined above, or

(b) reacting the compound of formula (II) with a compound of the formula

$R^3X^1$ or $R^4X^1$ (IV)

wherein $R^3$ and $R^4$ are as defined above, and

$X^1$ represents a halogen atom, or

(c) reacting a compound of the formula

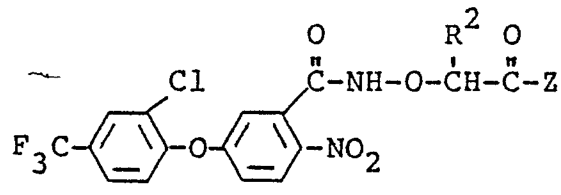

(V)

wherein $R^2$ and Z are as defined above, with a compound of the formula

$R^1$-$X^2$ (VI)

wherein $R^1$ is as defined above, and

$X^2$ represents an acid residue,

or diazomethane.

In process variant (a), the ester-forming reactive derivative of the compound (II) may, for example, be a halide or an acid anhydride. It can be easily prepared, for example, by reacting the compound of formula (I) with a halogenating agent such as thionyl chloride or a dehydrating agent such as acetic anhydride or a haloformate ester by methods known per se.

The reaction of the halide of the compound of formula (II) with the alcohol or thiol of formula (III) may generally be carried out in the presence of a base in an inert organic solvent. The amount of the alcohol or thiol of formula (III) is not strictly limited and may be varied widely depending upon the reaction conditions, the type of the alcohol or thiol, etc. Generally, it is convenient to use the compound of formula (III) in a proportion of 1 to 3 moles, preferably 1 to 1.5 moles, per mole of the halide of the compound of formula (II). the amount of the base used is neither critical, and may be varied widely. Usually, it is convenient to use it in a proportion of 1 to 3 equivalents, preferably 1 to 1.5 equivalents, per mole of the halide of the compound (II).

The reaction temperature is generally 0 °C to the refluxing temperature of the reaction mixture, preferably 0 to 40 °C.

Examples of the inert organic solvent used include aromatic hydrocarbons such as benzene and toluene, ethers such as tetrahydrofuran and dioxane, acetone, acetonitrile, dimethylformamide and dimethylsulfoxides. Examples of the base include tertiary amines such as pyridine and triethylamine, sodium hydroxide, potassium hydoxide, sodium carbonate, potassium carbonte, sodium hydrogen carbonate, potassium hydrogen carbonate and sodium hydride.

The compound of formula (II) used in the above process may be prepared, for example, by reacting a compound of the following formula (V'), which can be easily prepared by the method described in Japanese Laid-Open Patent Publication No. 122045/1982,

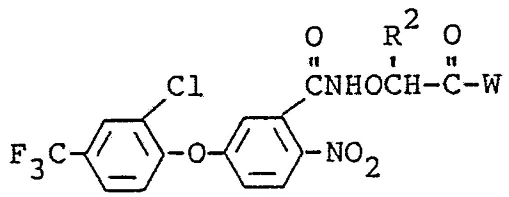

(V')

wherein $R^2$ is as defined above, and

W represents a lower alkoxy group,

with the compound of formula (VI) to prepare a compound of the formula

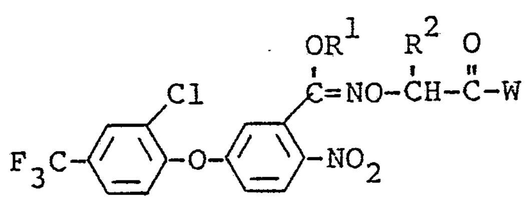

(II')

wherein $R^1$, $R^2$ and W are as defined above,

and hydrolyzing the compound of formula (II') in a customary manner.

The compound of formula (II') can be prepared by reacting the compound of formula (V') with the compound of formula (VI) in the presence of a base in a suitable organic solvent. This reaction is generally carried out under ice cooling or at a temperature up to the refluxing temperature of the reaction mixture, preferably at room temperature to about 80 °C. The proportion of the compound of formula (VI) relative to the compound of formula (V') is not critical and can be varied widely. The suitable proportion of the compound of formula (VI) is 1 to 3 moles, preferably 1 to 2 moles, per mole of the compound of formula (V'). Conveniently, the base is used usually in a proportion of 1 to 3 equivalents, preferably 1 to 2 equivalents, per mole of the compound of formula (V').

Examples of the solvent used in the above reaction include alcohols such as methanol and ethanol, aromatic hydrocarbons such as benzene and toluene, ethers such as tetrahydrofuran and dioxane, acetone, acetonitrile, dimethylformamide and dimethyl sulfoxide. Mixtures of these with water may also be used.

Examples of the base that can be used in the above reaction are tertiary amines (e.g., pyridine and triethylamine), sodium hydroxide, potassium hydroxide, sodium carbonate, potassium carbonate, sodium ethylate and sodium hydride.

The reaction may be carried out in a two-layer system. This reaction can be carried out by using a phase-transfer catalyst in an amount of, for example, 1 to 50 %, preferably 5 to 30 % by weight, based on the compound of formula (V'). Examples of the phase transfer catalyst are quaternary ammonium salts such as tetramethyl ammonium bromide, tetrabutyl ammonium bromide and benzyl tributyl ammonium bromide and quaternary phosphonium salts such as tetraphenyl phosphonium bromide.

According to process variant (b), the compound of formula (II) is esterified with the halide of formula (IV). This esterification is carried out in an organic solvent in the presence of a base. The reaction temperature is not strictly limited. Generally, the reaction is carried out under ice cooling or at a temperature up to the refluxing temperature of the reaction mixture, preferably at room temperature to about 80 °C. The amount of the halide of formula (IV) used is neither critical, and may be varied widely depending upon the reaction conditions, the type of the halide used, etc. Generally, its suitable amount is 1 to 3 moles, preferably 1 to 1.5 moles, per mole of the compound of formula (II). The suitable amount of the base is generally 1 to 3 equivalents, preferably 1 to 1.5 equivalents, per mole of the compound of formula (II).

Examples of the organic solvent and the base which can be used in the sterification reaction may be the same as those given above with regard to process variant (a).

According to process variant (c), the compound of formula (I) can be prepared by reacting the compound of formula (V) with the compound of formula (VI) in a suitable organic solvent in the presence of a base. This reaction is generally carried out under ice cooling or at a temperature up to the refluxing temperature of the reaction mixture, preferably at room temperature to a temperature of about 80 °C. The amount of the compound of formula (VI) used relative to the compound of formula (V) is not critical and can be varied widely. Generally, the suitable amount of the compound of formula (VI) is 1 to 3 moles, preferably 1 to 2 moles, per mole of the compound of formula (V). Conveniently, the base is used in an amount of usually 1 to 3 equivalents, preferably 1 to 2 equivalents, per mole of the compound of formula (V).

Examples of the solvent used in the above reaction include alcohols such as methanol and ethanol, aromatic hydrocarbons such as benzene and toluene, acetone, acetonitrile, dimethylformamide and dimethyl sulfoxide. Mixures of these solvents with water may also be used.

Examples of the base used in the above reaction include tertiary amines (e.g., pyridine and triethylamine), sodium hydroxide, potassium hydroxide, sodium carbonate, potassium carbonate, sodium ethylate and sodium hydride.

The reaction may be carried out in a two-layer system. This reaction can be carried out by using a phase-transfer catalyst in an amount of, for example, 1 to 50 %, preferably 5 to 30 % by weight, based on the compound of formula (V). Examples of the phase transfer catalyst are quaternary ammonium salts such as tetramethyl ammonium bromide, tetrabutyl ammonium bromide and benzyl tributyl ammonium bromide and quaternary phosphonium salts such as tetraphenyl phosphonium bromide.

The compound of formula (V) used as a starting material in the above process can be produced by reacting an ester-forming reactive derivative of the compound (VII) disclosed in Japanese Laid-Open Patent Publication No.122045/1982

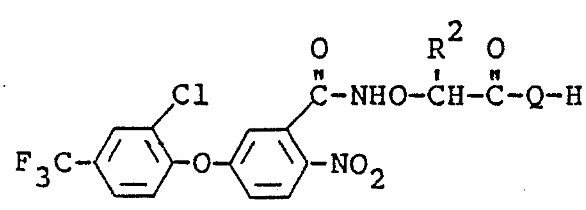

(VII)

wherein $R^2$ and Q are as defined above, with the compound of formula (III) (intermediate synthesis method 1), or by reacting the compound of formula (II) with the compound of formula (IV) (intermediate synthesis method 2).

In the above intermediate synthesis method 1, the ester-forming reactive derivative may, for example, be a halide or an acid anhydride. These ester-forming derivatives may be easily prepared, for example, by

reacting the compound of formula (VII) with a halogenating agent such as thionyl chloride or a dehydrating agent such as acetic anhydride or a haloformate ester by methods known per se.

The reaction of the halide of the compound of formula (VII) with the alcohol or thiol of formula (II) can be carried out generally in the presence of a base in an inert organic solvent. The amount of the alcohol or thiol of formula (III) used is not strictly limited, and may be varied widely depending upon the reaction conditions, the type of the alcohol or thiol, etc. Generally, it is convenient to use the alcohol or thiol in an amount of 1 to 3 moles, preferably 1 to 1.5 moles, per mole of the halide of the compound of formula (VII). The amount of the base used is neither critical, and may be varied widely. Usually, it is convenient to use it in an amount of 1 to 3 equivalents, preferably 1 to 1.5 equivalents, per mole of the halide of the compound of formula (VII).

The reaction temperature is generally 0 °C to the refluxing temperature of the reaction mixture, preferably 0 to 40 °C.

Examples of the solvent used in this reaction include aromatic hydrocarbons such as benzene and toluene, ethers such as tetrahydrofuran and dioxane, acetone, acetonitrile, dimethylformamide, and dimethyl sulfoxide. Mixtures of these solvents and water may also be used. Examples of the base include tertiary amines (e.g., pyridine and triethylamine), sodium hydroxide, potassium hydroxide, sodium carbonate, potassium carbonate, sodium hydrogen carbonate, potassium hydrogen carbonate and sodium hydride.

In the intermediate synthesis method 2, the compound of formula (VII) is esterified with the halide of formula (IV). This esterification can also be carried out in the presence of a base in an organic solvent. The reaction temperature is not strictly limited. Generally, the reaction is carried out under ice cooling or at a temperature up to the refluxing temperature of the reaction mixture, preferably room temperature to about 80°C. The amount of the halide of formula (IV) used is not critical, and may be varied widely depending upon the reaction conditions, the type of the halide used, etc. Generally, the suitable amount of the halide of formula (IV) is 1 to 3 moles, preferably 1 to 1.5 moles, per mole of the comound of formula (VII). The suitable amount of the base used is 1 to 3 equivalents, preferably 1 to 1.5 equivalents, per mole of the compound of formula (VII).

Examples of the organic solvent and the base that can be used in this esterification reaction may be the same as those given hereinabove with respect to process variant (a).

The acid residue in the compound of formula (VI), the other starting material, may, for example, be a halogen atom or the group $OSO_2R^4$ in which $R^4$ is a lower alkyl group or a phenyl group.

In any of the process variants (a), (b) and (c), the compound of formula (I) in accordance with this invention may be isolated and purified by pouring the reaction mixture after the reaction into water and treating it by a convention method, for example, extraction with an organic solvent, recrystallization, or column chromatography.

The following examples specifically illustrate the compounds of formula (I) provided by this invention and processes for production thereof.

Starting Material Synthesis Example 1

Methyl O-methoxycarbonylmethyl-5-(2-chloro-4-trifluoromethylphenoxy)-2-nitrobenzohydroximate [used in process variants (a) and (b)]:-

Production Example (A)

A suspension composed of 6.30 g (14 millimoles) of methoxycarbonylmethyl 5-(2-chloro-4-trifluoromethylphenoxy)-2-nitrobenzohydroxamate, 3.09 g (22.4 millimoles) of anhydrous potassium carbonate and 40 ml of DMF was heated to 65 to 67 °C, and 3.98 g (28 millimoles) of methyl iodide was added dropwise over about 15 minutes. Then, the mixture was stirred for 1 hour at the above temperature. The reaction mixture was poured into about 200 ml of ice water, and extracted twice with 30 ml of ethyl acetate. The extracts were washed with a saturated aqueous solution of sodium chloride and dried over magnesium sulfate. The drying agent was separated by filtration, and the solvent was evaporated. The resulting oily substance was purified by column chromatography silica gel; n-hexane/ethyl acetate 4:1) to give 710 mg (yield 10.9 %) of the desired compound.

Production Example (B)

Methoxycarbonylmethyl 5-(2-chloro-4-trifluoromethylphenoxy)-2-nitrobenzohydroxamate (100 g; 0.223 mole) was suspended in a mixture of 130 ml of ether and 130 ml of tetrahydrofuran, and with stirring under ice cooling, a solution of diazomethane prepared from 58.5 g (0.56 mole) of N-nitrosomethylurea in 1 liter of ether was added dropwise over about 1 hour. Then, the mixture was stirred under ice cooling for about 30 minutes. The excess of diazomethane was decomposed with acetic acid, and the solvent was evaporated. The solid obtained was recrystallized from methanol to give 82.5 g (yield 80.00%) of the desired compound.

NMR ($CDCl_3$; $\delta$ ppm):
3.79 (3H, s), 3.95 (3H, s), 4.95 (2H, s), 6.9 - 8.3 (6H, m).
Melting point: 78.0 - 81.5 °C

Starting Material Synthesis Example 2

Production Example (C)

One hundred grams (0.216 mole) of methyl O-methoxycarbonylmethyl-5-(2-chloro-4-trifluoromethylphenoxy)-2-nitrobenzohydroximate was suspended in 300 ml of methanol, and with stirring under ice cooling, 129.6 g (0.324 mole) of a 10% aqueous solution of sodium hydroxide was added dropwise over about 30 minutes. The mixture was stirred at room temperature for about 4 hours. Methanol was evaporated from the reaction mixture, and 300 ml of ice water was added to the residue. The mixture was washed twice with 50 ml of ether. The aqueous layer was acidified with dilute hydrochloric acid, and extracted twice with 100 ml of ether. The ethereal layers were combined, washed with an aqueous sodium chloride solution, and dried over magnesium sulfate. The drying agent was separated by filtration, and the ether was evaporated to obtain a crude product (syn-form). The crude product was recrystallized from carbon tetrachloride to obtain 68.8 g; yield 71.0 %) of the desired compound (anti-form).

NMR ($CDCl_3$; $\delta$ ppm):
3.87 (3H, s), 4.55 (2H, s), 6.94 - 8.12 (6H, s).
Melting point: 134.5 - 135.0 °C.

Example 1

Production of methyl O-methylthiocarbonylmethyl-5-(2-chloro-4-trifluoromethylphenoxy)-2-nitrobenzohydroximate (compound No. 1) [by process variant (a)]:-

Methyl O-carboxymethyl-5-(2-chloro-4-trifluoromethylphenoxy)-2-nitrobenzohydroximate (1.0 g; 2.23 millimoles) was dissolved in 2 ml of thionyl chloride, and the solution was heated under reflux for 1 hour. The excess of thionyl chloride was evaporated to obtain an acid chloride.

A 15 % aqueous solution of sodium salt of methylmercaptan (1.25 g; 2.68 millimoles) was covered with 5 ml of ether, and with stirring under ice cooling, a solution of the acid chloride obtained as described above in 5 ml of ether was added dropwise over about 10 minutes. The mixture was then stirred at room temperature for 1.5 hours. The ethereal layer was separated and dried over magnesium sulfate. The drying agent was separated by filtration, the ether was evaporated. The resulting solid was recrystallized from ethanol to give 690 mg (yield 64.7 %) of the desired compound No. 1 (anti-form).

Table 1 below shows diphenyl ether derivatives (compounds Nos. 2 to 11) synthesized by the same procedure as above.

Table 1

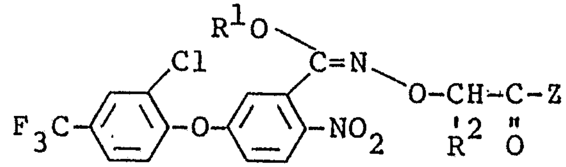

(anti-form)

| Compound No. | $R^1$ | $R^2$ | Z | Refractive index $[n_D^{20}]$ (Melting point) | NMR δ (ppm) (in $CDCl_3$) |
|---|---|---|---|---|---|
| 1 | $-CH_3$ | H | $-SCH_3$ | (96.0-97.0°) | |
| 2 | $-CH_3$ | $-CH_3$ | $-SCH_3$ | | |
| 3 | $-CH_3$ | H | $-SC_2H_5$ | (69.5-71.5°) | |
| 4 | $-CH_3$ | H | $-S-n-C_3H_7$ | 1.5504 | |
| 5 | $-CH_3$ | H | $-S-i-C_3H_7$ | (116.0-117.0°) | |
| 6 | $-CH_3$ | H | $-S-n-C_4H_9$ | (42.0-43.5°) | |
| 7 | $-CH_3$ | H | $-S-t-C_4H_9$ | (145.5-147.0°) | |
| 8 | $-CH_3$ | H | $-S-s-C_4H_9$ | (80.5-82.0°) | |
| 9 | $-CH_3$ | H | $-S-s-C_5H_{11}$ | 1.5462 | |
| 10 | $-C_2H_5$ | H | $-SCH_3$ | | |
| 11 | $i-C_3H_7$ | H | $-SCH_3$ | | |

- to be continued -

Table 1 (continued)

| Compound No. | $R^1$ | $R^2$ | Z | Refractive index $[n_D^{20}]$ (Melting point) | NMR $\delta$ (ppm) (in $CDCl_3$) |
|---|---|---|---|---|---|
| 12 | $-CH_3$ | H | $-O-CH_2CH=CH_2$ | (44.5-45.5°) | 3.82(3H, s)<br>4.43(2H, s)<br>4.56(2H, d, J=7Hz)<br>5.03-5.43(2H, m)<br>5.56-6.23(1H, m)<br>6.90-8.16(6H, m) |
| 13 | $-CH_3$ | $-CH_3$ | $-O-CH_2CH=CH_2$ | | |
| 14 | $-C_2H_5$ | H | $-O-CH_2CH=CH_2$ | | |
| 15 | $-C_2H_5$ | $-CH_3$ | $-O-CH_2CH=CH_2$ | | |
| 16 | $-CH{<}^{CH_3}_{CH_3}$ | H | $-O-CH_2CH=CH_2$ | | |
| 17 | $-CH_3$ | H | $-O-CH_2\underset{CH_3}{C}=CH_2$ | | |
| 18 | $-CH_3$ | H | $-O-CH_2C=CH-CH_3$ | | |

- to be continued -

Table 1 (continued)

| Compound No. | $R^1$ | $R^2$ | Z | Refractive index $[n_D^{20}]$ (Melting point) | NMR $\delta$ (ppm) (in $CDCl_3$) |
|---|---|---|---|---|---|
| 19 | $-CH_3$ | H | $-O-CH_2\underset{Cl}{C}=CH_2$ | (89.0-91.0°) | 3.84(3H, s)<br>4.50(2H, s)<br>4.66(2H, s)<br>5.37-5.58(2H, m)<br>6.95-8.25(6H, m) |
| 20 | $-CH_3$ | H | $-O-CH_2CH=CHCl$ | (56.0-59.0°) | 3.82(3H, s)<br>4.40(2H, s)<br>4.50, 4.75<br>(2H, q, J=6Hz)<br>5.60-6.33(2H, m)<br>6.76-8.23(6H, m) |
| 21 | $-CH_3$ | H | $-O-CH_2CH=CHCH_2Cl$ | (59.0 62.5°) | 3.84(3H, s)<br>4.09(2H, d, J=7Hz)<br>4.43(2H, s)<br>4.68(2H, d, J=7Hz)<br>5.62-6.00(2H, m)<br>6.88-8.18(6H, m) |
| 22 | $-CH_3$ | H | $-O-CH_2\underset{Cl}{C}=CHCl$ | | |

- to be continued -

Table 1 (continued)

| Compound No. | $R^1$ | $R^2$ | Z | Refractive index $[n_D^{20}]$ (Melting point) | NMR δ(ppm) (in $CDCl_3$) |
|---|---|---|---|---|---|
| 23 | $-CH_3$ | H | $-O-CH_2C{\equiv}CH$ | (78.5-81.0°) | 2.28-2.72(1H, m)<br>3.85(3H, s)<br>4.49(1H, s)<br>4.75(2H, d, J=2.5Hz)<br>6.95-8.33(6H, m) |
| 24 | $-CH_3$ | $-CH_3$ | $-O-CH_2C{\equiv}CH$ | | |
| 25 | $-CH_3$ | H | $-O-CH_2CH=CHCN$ | | |
| 26 | $-CH_3$ | H | $-O-CH_2CH=CH(CO_2CH_3)$ | 1.5310 $[n_D^{20.8}]$ | 3.72(3H, s)<br>3.84(3H, s)<br>4.47(2H, s)<br>4.91(2H, d-d)<br>5.82-6.08(1H, d-t)<br>6.68-8.14(7H, m) |

Example 2

Production of methyl O-methylthiocarbonylmethyl-5-(2-chloro-4-trifluoromethylphenoxy)-2-nitrobenzohydroximate (compound No. 1) [by process variant (a)]:-

Methyl O-carboxymethyl-5-(2-chloro-4-trifluoromethylphenoxy)-2-nitrobenzohydroximate (100 g; 0.223

mole) and 22.6 g (0.223 mole) of triethylamine were dissolved in 1 liter of tetrahydrofuran, and with stirring under ice cooling, 24.2 g (0.223 mole) of ethyl chloroformate was added dropwise over about 30 minutes. The mixture was stirred further for 30 minutes at the above temperature. A 15% aqueous solution of sodium salt of methylmercaptan (103.6 g; 0.223 mole) was added to the resulting mixed acid anhydride over about 5 minutes, and the mixture was stirred at room temperature for 2 hours. Tetrahydrofuran was evaporated from the reaction mixture, and 300 ml of ice water was added to the residue. The mixture was extracted twice with 100 ml of ether. The ethereal layers were combined, washed with an aqueous sodium chloride solution, and dried over magnesium sulfate. The drying agent was separated by filtration, and the ether was evaporated. The resulting crude crystals were recrystallized from ethanol to give 80.5 g (yield 73 %) of the desired compound (anti-form).

Example 3

Production of methyl O-allyloxycarbonylmethyl-5-(2-chloro-4-trifluoromethylphenoxy)-2-nitrobenzohydroximate (compound No. 12) [by process variant (b)]:-

Allyl bromide (0.54 g; 4.46 millimoles) was added to a suspension composed of 1.0 g (2.23 millimoles) of methyl O-carboxymethyl-5-(2-chloro-4-trifluoromethylphenoxy)-2-nitrobenzohydroximate, 0.19 g (2.26 millimoles) of sodium hydrogen carbonate and 10 ml of DMF, and the mixture was stirred overnight at room temperature. The reaction mixture was poured into about 100 ml of ice water, and the mixture was extracted twice with 20 ml of ethyl acetate. The extracts were combined, washed with a saturated aqueous sodium chloride solution and dried over magnesium sulfate. The drying agent was separated by filtration, and the solvent was evaporated. The resulting oily substance was purified by column chromatography (silica gel; n-hexane/ethyl acetate 4:1) to give 750 mg (yield 68.9 %) of the desired compound No. 12 (antiform).

Example 4

Production of methyl O-propargyloxycarbonylmethyl-5-(2-chloro-4-trifluoromethylphenoxy)-2-nitrobenzohydroximate (compound No. 23) [by process variant (b)]:-

Propargyl bromide (0.53 g; 4.46 millimoles) was added to a suspension composed of 1.0 g (2.23 millimoles) of methyl O-caboxymethyl-5-(2-chloro-4-trifluoromethylphenoxy)-2-nitrobenzohydroximate, 0.19 g (2.26 millimoles) of sodium hydrogen carbonate and 10 ml of DMF, and the mixture was stirred at 60 to 65 °C for 3 hours. The reaction mixture was poured into about 10 ml of ice water, and the mixture was extracted twice with 20 ml of ethyl acetate. The extracts were combined, washed with a saturated aqueous solution of sodium chloride, and dried over magnesium sulfate. The drying agent was separated by filtration, and the solvent was evaporated. The resulting oily substance was purified by column chromatography (silica gel; n-hexane/ethyl acetate 4:1) to give 850 mg (yield 76.2 %) of the desired compound (antiform).

Starting Material Synthesis Example 3

Allyloxycarbonylmethyl 5-(2-chloro-4-trifluoromethylphenoxy)-2-nitrobenzohydroxamate [used in process variant (a)]:-

Allyl bromide (2.42 g; 0.02 mole) was added to a suspension composed of 4.36 g (0.01 mole) of carboxymethyl 5-(2-chloro-4-trifluoromethylphenoxy)-2-nitro benzohydoxamate, 1.68 g (0.02 mole) of sodium hydrogen carbonate and 20 ml of DMF, and the mixture was stirred at 60 to 70 °C for 3 hours. The reaction mixture was poured into 200 ml of ice water, and the mixture was extracted twice with 40 ml of ethyl acetate. The extracts were combined, washed with a saturated aqueous solution of sodium chloride, and dried over magnesium sulfate. The drying agent was separated by filtration and the solvent was evaporated. The resulting oily substance was purified by column chromatography (silica gel; n-hexane/ethyl acetate 2:1) to give 3.24 g (yield 68 %) of the desired compound.

NMR ($CDCl_3$; $\delta$ ppm):
4.57 (2H, s), 4.63 (2H, d), 5.10 - 5.39 (2H, m), 5.60 - 6.23 (1H, m), 6.89 - 8.17 (6H, m).

Starting Material Synthesis Example 4

Methylthiocarbonylmethyl 5-(2-chloro-4-trifluoromethylphenoxy)-2-nitrobenzohydroxamate [used in process variant (c)]:-

One gram (2.3 millimoles) of carboxymethyl 5-(2-chloro-4-trifluoromethylphenoxy)-2-nitrobenzohydroxamate and 0.23 g (2.3 millimoles) of triethylamine were dissolved in 10 ml of tetrahydrofuran. With stirring under ice cooling, 0.32 g (2.3 millimoles) of ethyl chloroformate was added dropwise over 10 minutes. The mixture was then stirred for 30 minutes. To the resulting mixed acid anhydride was added a 15% aqueous solution of 1.07 g (2.3 millimoles) of sodium salt of methylmercaptan over about 5 minutes. Then, the mixture was stirred at room temperature for 1.5 hours. Tetrahydrofuran was evaporated from the reaction mixture, and 20 ml of ice water was added to the residue. The mixture was extracted twice with 10 ml of ethyl acetate. The extracts were combined, washed with an aqueous solution of sodium chloride, and dried over magnesium sulfate. The drying agent was separated by filtration, and ethyl acetate was evaporated. The residue was purified by column chromatography (silica gel; n-hexane/ethyl acetate = 2:1) to give 1.0 g (yield 94 %) of the desired compound.

NMR ($CDCl_3$; $\delta$ ppm): 2.34 (3H, s), 4.66 (2H, s), 6.80-8.22 (6H, m), 9.41 (1H, s).

Example 5

Production of methyl O-allyloxycarbonylmethyl-5-(2-chloro-4-trifluoromethylphenoxy)-2-nitrobenzohydroximate (compound No. 27, syn-form) [by process variant (c)]:-

A solution of diazomethane (5.44 millimoles) in 10 ml of ether was added dropwise at 10 °C to a solution of 1.0 g (2.10 millimoles) of allyloxycarbonylmethyl 5-(2-chloro-4-trifluoromethylphenoxy)-2-nitrobenzohydroxamate in 10 ml of ether, and the mixture was stirred for 5 minutes. The solvent was evaporated, and the resulting oily substance was purified by column chromatography (silica gel; n-hexane/ethyl acetate = 2:1) to give 0.76 g (yield 74 %) of the desired compound (syn-form).

NMR ($CDCl_3$; $\delta$ ppm):
3.90 (3H, s), 4.55 (2H, s), 4.40 (2H, d), 5.07-5.40 (2H, m), 5.60-6.11 (1H, m), 6.90-8.10 (6H, m).
$n_D^{20}$ :1.5438

Example 6

Production of methyl O-allyloxycarbonylmethyl5-(2-chloro-4-trifluoromethylphenoxy)-2-nitrobenzohydroximate (compound No. 12, anti-form):-

Thirty grams of methyl O-allyloxycarbonylmethyl-5-(2-chloro-4-trifluoromethylphenoxy)-2-nitrobenzohydroximate (syn-form) was dissolved in 600 ml of toluene, and nitrogen was blown into the solution for 15 minutes. The solution was irradiated by a high-pressure mercury lamp (UVL-100p, made by Rikokagaku Sangyo) through a Pyrex filter for 10 hours. Toluene was evaporated under reduced pressure. The resulting oily substance was purified by column chromatography (silica gel; n-hexane/ethyl acetate = 3:1) to give 22.0 g (yield 73 %) of the desired compound (anti-form).

Example 7

Production of methyl O-methylthiocarbonylmethyl-5-(2-chloro-4-trifluoromethylphenoxy)-2-nitrobenzohydroximate (compound No. 28, syn-form) [by process variant (c)]:-

A solution of diazomethane (5.44 millimoles) in 10 ml of ether was added dropwise at 0 °C to a solution of 1.0 g (2.14 millimoles) of methylthiocarbonylmethyl 5-(2-chloro-4-trifluoromethylphenoxy)-2-nitrobenzohydroxamate in 10 ml of ether. The mixture was stirred for 5 minutes, and the solvent was evaporated. The resulting oily substrance was purified by column chromatography (silica gel; n-hexane/ethyl acetate = 3:1) to give 0.22 g (yield 22 %) of the desired compound (syn-form).

Melting point: 88 - 89 °C.
NMR ($CDCl_3$; δppm):
2.28 (3H, s), 3.93 (3H, s), 4.59 (2H, s), 6.88-8.12 (6H, m).

Example 8

Production of methyl O-methylthiocarbonylmethyl-5-(2-chloro-4-trifluoromethylphenoxy)-2-nitrobenzohydroximate (compound No. 1, anti-form):-

Thirty grams of methyl O-methylthiocarbonylmethyl-5-(2-chloro-4-trifluoromethylphenoxy)-2-nitrobenzohydroximate (syn-form) was dissolved in 600 ml of toluene, and nitrogen was blown into the solution for 15 minutes. The solution was irradiated for 7 hours by a high-pressure mercury lamp (UVL-100p, made by Rikokagaku Sangyo) through a Pyrex filter. Then, toluene was evaporated under reduced pressure, and the resulting oily substance was purified by column chromatography (silica gel; n-hexane/ethyl acetate = 3:1) to give 21.3 g (yield 71 %) of the desired compound (anti-form).

Melting point: 96 - 97 °C:
2.24 (3H, s), 3.85 (3H, s), 4.50 (2H, s), 7.00-8.24 (6H, m).

Since the compounds of this invention represented by formula (I) have very high herbicidal activity, they show a very high herbicidal efficacy in low dosage. They also have good selectivity for cultivated crops, and are agriculturally useful.

The compounds of this invention can control various weeds occurring in paddies and upland farms in the preemergence period to the growth period after emergence. For example, they can control narrow-leaved and broad-leaved weeds in paddies such as barnyardgrass (Echinochloa crus-galli, umbrellaplant (Cyperus difformis), monochoria (Monochoria vaginalis ), false pimpernel (Lindernia pyxidaria), waterwort (Elatine triandra), "kikashigusa" ( Rotala indica), bulrush (Scirpus juncoides), and spikerush (Eleocharis acicularis), and narrow-leaved and broad-leaved weeds in upland farms such as crabgrass (Digitaria sanguinalis), giant foxtail (Setaria faberi), goosegrass (Eleusine indica), ricegrass paspalum (Paspalum orbiculare), water foxtail (Alopecurus aequalis), common chickweed (Stellaria media), various species of Polygonum, various species of Amaranthus, velvetleaf (Abutilon theophrasti), lambsquarters (Chenopodium album), prickly sida (Sida spinosa), cocklebur (Xanthium strumarium), ragweed (Ambrosia artemisiifolia ), sheherd's purse (Capsella bursa-pastoris), flexuous bittercress ( Cardamine flexuosa), "common blackjack" (Bidens pilosa), cleavers (Galium aparine) and wild buckwheat (Polygonum convolvulus). The compounds of this invention may be used in orchards, mulberry fields and non-agricultural lands.

The compounds of this invention show particularly strong herbicidal activity against broad-leaved weeds growing in upland farms. For example, by foliar treatment in upland farms, they show an excellent herbicidal efficacy against such weeds as green amaranth (Amaranthus viridis), common purslane (Portulaca oleracea), cocklebur, common blackjack, ragweed, burcucumber (Sicyos angulatus), fig-leaved goosefoot (Chenopodium ficifolium), lambsquarters, smartweed (Polygonum lapathifolium), common chickweek, shepherd's purse, mouseear chickweek (Cerastium vulgatum, jimsonweed (Datura stramonium), hemp sesbania (Sesbania exaltata ), sicklepod (Cassia tora), tall morningglory (Ipomoea purpurea), black nightshade (Solanum nigrum), bullnettle (Solanum carolinense), henbit (Lamium amplexicaule), plaintain (Plantago major), velvetleaf, prickly sida, creeping woodsorrel (Oxalis corniculata), cleavers, wild buckwheat, speadwell (Veronica persica and poppy Papaver roheas . The compounds of this invention furthermore have selectivity for cultivated plants, and do not substantially cause significant phytotoxicity to gramineous crops such as rice, corn, wheat, barley, sorghum and sugarcane, and broad-leaved crops such as soybean.

For use as herbicides, the compounds of this invention may be mixed with agriculturally and horticulturally acceptable carriers or diluents, additives and adjuvants by known techniques and formulated into various forms normally used as agricultural chemicals, for example, a dust, granules, a wettable powder, an emulsifiable concentrate, a soluble powder, a sol, etc. They may be used in admixture or combination with other agricultural chemicals, such as fungicides, insecticides, miticides, other herbicides, plant growth regulating agents, fertilizers, and soil conditioners.

The combined use with another herbicide enables the dosage of the herbicide of this invention to be decreased and permits labor saving. Moreover, the cooperative action of the two chemicals broadens the herbicidal spectrum and the synergistic action of both can be expected to give a higher efficacy.

The carrier or diluent may be any solid or liquid carriers or diluents generally used in the field of agriculture. Solid carriers include talc or clays typified by kaolinite, montmorillonite and attapulgite; inorganic

materials such as mica, pyrophyllite, pumice, vermicullite, gypsum, calcium carbonate, dolomite, diatomaceous earth, magnesium lime, apatite, zeolite, silicic anhydride and synthetic calcium silicate; organic substances of the plant origin such as soybean meal, tobacco powder, walnut powder, wheat flour, wood powder, starch and crystalline cellulose; natural or synthetic polymeric compounds such as coumarone resins, petroleum resins, alkyd resins, polyvinyl chloride, polyalkylene glycols, ketone resins, ester gum, copal gum and dammar gum; waxes such as carnauba wax and beeswax; and urea. Suitable liquid carriers or diluents include paraffinic or naphthenic hydrocarbons such as kerosene, mineral oils, spindile oil and white oil; aromatic hydrocarbons such as benzene, toluene, xylene, ethylbenzene, cumene and methylnaphthalene; chlorinated hydrocarbons such as carbon tetrachloride, chloroform, trichloroethylene, monochlorobenzene and o-chlorotoluene; ethers such as dioxane and tetrahydrofuran; ketones such as acetone, methyl ethyl ketone, diisobutyl ketone, cyclohexanone, acetophenone and isophorone; esters such as ethyl acetate, amyl acetate, ethylene glycol acetate, diethylene glycol acetate, dibutyl maleate and diethyl succinate; alcohols such as methanol, n-hexanol, ethylene glycol, diethylene glycol, cyclohexanol and benzyl alcohol; ether alcohols such as ethylene glycol ethyl ether, ethylene glycol phenyl ether, diethylene glycol ethyl ether and diethylene glycol butyl ether; polar solvents such as dimethyl formamide and dimethyl sulfoxide; and water.

Surface-active agents and other adjuvants may be used to emulsify, disperse, wet, spread or bind the compound of this invention, adjust its disintegrability, stabilize the active ingredients of the herbicide, improve the flowability of the herbicide, prevent corrosion, or otherwise. The surface-active agents may be nonionic, anionic, cationic and amphoteric. Usually, nonionic and anionic surface-active agents are suitable. Suitable nonionioc surface-active agents include, for example, polyaddition products of ethylene oxide with higher alcohols such as lauryl alcohol, stearyl alcohol and oleyl alcohol; polyaddition products of ethylene oxide with alkylphenols such as isooctylphenol and nonylphenol; polyaddition products of ethylene oxides with alkylnaphthols such as butylnaphthol and octylnaphthol; polyaddiion products of ethylene oxide with higher fatty acids such as palmitic acid, stearic acid and oleic acid; polyaddition products of ethylene oxide with mono-or di-alkylphosphoric acids such as stearylphosphoric acid and dilaurylphosphoric acid; polyaddition products of ethylene oxide with amine compounds such as dodecylamine and stearamide; higher fatty acid esters of polyhydric alcohols such as sorbitan, and polyaddition products of ethylene oxide with these esters; and a polyaddition product of ethylene oxide with propylene oxide. Suiable anionic surface-active agents include, for example, alkylsulfuric ester salts such as sodium laurylsulfate and oleyl sulfate amine salt; alkylsulfonic acid salts such as sodium 2-ethylhexenesulfonate; and arylsulfonic acid salts such as sodium isopropylnaphthalenesulfonate, sodium methylenebisnaphthalenesulfonate, sodium ligninesulfonate and sodium dodecylbenzenesulfonate.

To improve the properties of the formulated herbicide and increase its herbicidal effect, the compound of the invention may also be used in combination with other adjuvants including such polymeric compounds as casein, gelatin, albumin, glue, sodium alginate, carboxymethyl cellulose, methyl cellulose, hydroxyethyl cellulose and polyvinyl alcohol.

The above carriers or diluents and various adjuvants may be used singly in in suitable combinations depending upon the form of the formulated herbicide, the place and time of application, etc.

The proportion of the compound of the invention as an active ingredient in the formulated herbicide may be varied with the form of the herbicide. For example, it is usually from 0.1 to 99 % by weight, preferably from 1 to 80 % by weight.

The dust usually contains 1 to 25 % by weight of the active ingredient and the remainder being a solid carrier.

The wettable powder usually contains 25 to 90 % by weight of the active ingredient and the remainder being a solid carrier and a dispersing and wetting agent and optionally a protective colloid, a thixotropic agent, a defoamer, etc.

The granules usually contain 1 to 35 % by weight of the active ingredient and the remainder being mostly a solid carrier. The active ingredient is uniformly mixed with the solid carrier, or uniformly fixed to, or adsorbed on, the surface of the solid carrier. The granules have a particle diameter of about 0.2 to 1.5 mm.

The emulsifiable concentrate usually contains 1 to 30 5 by weight of the active ingredient, about 5 to 20 % by weight of an emulsifier and the remainder being a liquid carrier and optionally a corrosion inhibitor.

The compound of formula (I) provided by this invention may be applied directly as a herbicide or in any desired form such as the formulations described above.

The herbicide of this invention can be applied to various weeds in paddies occurring in paddies and upland farms in a preemergence period or in a growth period after emergence, preferably to weeds in a growth period. Application to upland farms is especially suitable.

In controlling weeds by using the compounds of this invention, a herbicidally effective amount of the

compound of this invention may be applied to the soil in the locus where weeds before emergence are desired to be controlled, or directly to weeds after emergence.

The rate of application can be small because the compounds of this invention have very high herbicidal activity. It may be properly varied with the type of weeds to be controlled, the stage of growth, the place of application, the time of application, weather, etc. Generally, the rate of application is about 0.01 to 10,000 g, preferably about 0.1 to 5,000 g, per hectare as the amount of the compound of general formula (I) (the amount of the active ingredient). More preferably, it is about 50 to 2,000 g/ha before emergence (soil treatment), and about 1 to 100 g/ha after emergence (foliar treatment).

The following Formulation Examples show some examples of formulating the compound of this invention. All parts herein are by weight.

FORMULATION EXAMPLE 1

Granules:-

| Ingredient | Parts |
|---|---|
| Compound of formula (I) | 5 |
| Bentonite | 50 |
| Talc | 40 |
| Sodium dodecylbenzenesulfonate | 2 |
| Sodium ligninsulfonate | 2 |
| Polyoxyethylene alkyl aryl ether | 1 |

The above ingredients were thoroughly mixed, and a suitable amount of water was then added. The mixture was kneaded and granulated by a granulator to give 100 parts of granules.

FORMULATION EXAMPLE 2

Wettable powder:-

| Ingredient | Parts |
|---|---|
| Compound of formula (I) | 20 |
| Diatomaceous earth | 60 |
| White carbon | 15 |
| Sodium ligninsulfonate | 3 |
| Sodium dodecylbenzenesulfonate | 2 |

The above ingredients were mixed and kneaded and pulverized uniformly by a kneader to give 100 parts of a wettable powder.

FORMULATION EXAMPLE 3

Emulsifiable concentrate:-

| Ingredient | Parts |
|---|---|
| Compound of formula (I) | 30 |
| Xylene | 55 |
| Cyclohexanone | 10 |
| Calcium dodecylbenzenesulfonate | 3 |
| Polyoxyethylene aklkyl aryl ether | 2 |

The above ingredients were uniformly mixed and dissolved to form 100 parts of an emulsifiable concentrate.

Other forms of the formulation of the compound of this invention could be prepared substantially in accordance with the above Formulation Examples.

The following Test Examples demonstrate the excellent herbicidal activity of the compounds of formula (I) provided by this invention.

TEST EXAMPLE 1

Foliar treatment:-

Upland farm soil was filled in square pots (30 × 30 × 8 cm). Seeds of various crops and weeds indicated in Table 2 were sown each in fixed amounts, and grown in a greenhouse until the plants grew to the 1.5-to 3-leaf stage (18th day after sowing).

Each of the test compounds was dissolved in a mixture of acetone and water (1:1) containing 0.2 % of Tween 20 and applied uniformly to the foliage of the plants at each of the rates of application shown in Table 2.

Twenty-one days after the application, the herbicidal effect on the weeds and the degree of phytotoxicity to the crops were evaluated on the following standards, and the results are shown in Table 2.

Herbicidal effect: 0 to 100 % where 100 % means that the percent kill based on the non-treated area was 100 % (withered), and 0 % means that the percent kill based on the non-treated area was 0 % (not effect).

Phytotoxicity: 0 to 100 % where 100 % means that the percent phytotoxicity based on the non-treated area was 100 % (withered) and 0 % means that the percent phytotoxicity based on the non-treated area was 0 % (no phytotoxicity).

Table 2

| Compound No. | Rate of the active ingredient applied (g/ha) | Herbicidal effect | | | | | | | | | | Phytotoxicity to crops | | | |
|---|---|---|---|---|---|---|---|---|---|---|---|---|---|---|---|
| | | A | B | C | D | E | F | G | H | I | J | K | L | M | N |
| 1 | 12.5 | 50 | 100 | 100 | 100 | 100 | 100 | 100 | 100 | 100 | 100 | 0 | 0 | 0 | 0 |
| | 6.3 | 30 | 100 | 100 | 100 | 100 | 95 | 100 | 90 | 80 | 100 | 0 | 0 | 0 | 0 |
| | 3.1 | 20 | 100 | 100 | 100 | 80 | 90 | 95 | 50 | 40 | 90 | 0 | 0 | 0 | 0 |
| | 1.5 | 20 | 80 | 90 | 98 | 60 | 65 | 85 | 50 | 40 | 80 | 0 | 0 | 0 | 0 |
| 4 | 12.5 | 50 | 100 | 100 | 100 | 100 | 100 | 100 | 100 | 100 | 100 | 0 | 0 | 0 | 0 |
| | 6.3 | 30 | 100 | 100 | 100 | 100 | 90 | 100 | 90 | 80 | 100 | 0 | 0 | 0 | 0 |
| | 3.1 | 20 | 95 | 95 | 98 | 70 | 80 | 95 | 50 | 50 | 80 | 0 | 0 | 0 | 0 |
| | 1.5 | 10 | 80 | 90 | 90 | 60 | 60 | 80 | 40 | 40 | 70 | 0 | 0 | 0 | 0 |
| 12 | 6.3 | 40 | 100 | 95 | 100 | 100 | 100 | 100 | 100 | 85 | 100 | 0 | 0 | 0 | 0 |
| | 3.1 | 40 | 100 | 100 | 100 | 90 | 85 | 100 | 90 | 90 | 100 | 0 | 0 | 0 | 0 |
| | 1.5 | 10 | 95 | 95 | 95 | 30 | 25 | 70 | 50 | 65 | 70 | 0 | 0 | 0 | 0 |
| 23 | 6.3 | 40 | 100 | 100 | 100 | 100 | 100 | 100 | 100 | 95 | 100 | 0 | 0 | 0 | 0 |
| | 3.1 | 30 | 100 | 100 | 100 | 95 | 90 | 100 | 95 | 90 | 100 | 0 | 0 | 0 | 0 |
| | 1.5 | 10 | 98 | 98 | 98 | 50 | 50 | 80 | 70 | 65 | 80 | 0 | 0 | 0 | 0 |

- to be continued -

Table 2 (continued)

| Compound No. | Rate of the active ingredient applied (g/ha) | Herbicidal effect | | | | | | | | | | Phytotoxicity to crops | | | |
|---|---|---|---|---|---|---|---|---|---|---|---|---|---|---|---|
| | | A | B | C | D | E | F | G | H | I | J | K | L | M | N |
| 27 | 6.3 | 40 | 100 | 95 | 100 | 100 | 100 | 100 | 100 | 85 | 100 | 0 | 0 | 0 | 0 |
| | 3.1 | 40 | 100 | 100 | 100 | 90 | 85 | 100 | 90 | 90 | 100 | 0 | 0 | 0 | 0 |
| | 1.5 | 10 | 95 | 95 | 95 | 30 | 25 | 70 | 50 | 65 | 70 | 0 | 0 | 0 | 0 |
| 28 | 12.5 | 50 | 100 | 100 | 100 | 100 | 100 | 100 | 100 | 100 | 100 | 0 | 0 | 0 | 0 |
| | 6.3 | 30 | 100 | 100 | 100 | 100 | 95 | 100 | 90 | 80 | 100 | 0 | 0 | 0 | 0 |
| | 3.1 | 20 | 100 | 100 | 100 | 80 | 90 | 95 | 50 | 40 | 90 | 0 | 0 | 0 | 0 |
| | 1.5 | 20 | 80 | 90 | 98 | 60 | 65 | 85 | 50 | 40 | 80 | 0 | 0 | 0 | 0 |
| a | 400 | 90 | 100 | 100 | 100 | 100 | 100 | 100 | 100 | 75 | 100 | 50 | 35 | 20 | 20 |
| | 200 | 70 | 100 | 100 | 100 | 100 | 100 | 100 | 100 | 45 | 100 | 40 | 25 | 15 | 10 |
| | 100 | 50 | 100 | 100 | 100 | 55 | 95 | 100 | 100 | 50 | 100 | 10 | 15 | 15 | 5 |
| b | 25 | 50 | 100 | 100 | 100 | 100 | 100 | 100 | 100 | 90 | 100 | 0 | 35 | 25 | 20 |
| | 12.5 | 20 | 100 | 98 | 90 | 55 | 95 | 90 | 75 | 75 | 95 | 0 | 10 | 0 | 0 |
| | 6.3 | 30 | 90 | 70 | 60 | 35 | 80 | 55 | 75 | 45 | 55 | 0 | 0 | 0 | 0 |
| Non-treated | | 0 | 0 | 0 | 0 | 0 | 0 | 0 | 0 | 0 | 0 | 0 | 0 | 0 | 0 |

Note to Table 2

a in the column of "Compound No." represents sodium 5-(2′-chloro-4′-trifluoromethylphenoxy)-2-nitrobenzoate.

b in the column of "Compound No." represents methyl-5-(2′-chloro-4′-trifluoromethylphenoxy)-2-nitroacetophenoneoxime-O-acetate.

The alphabets in the columns of "Herbicidal effect" and "Phytotoxicity to crops" represent the following weeds and crops.

A: crabgrass
B: green amaranth
C: velvetleaf
D: jimsonweed
E: tall morningglory
F: cocklebur
G: wild mustard
H: smartweed
I: lambsquarters
J: hemp sesbania
K: corn
L: wheat
M: rice
N: soybean

TEST EXAMPLE 2

Soil treatment:-

Upland farm soil was filled in square pots (30 × 30 × 8 cm). Seeds of various crops and weeds indicated in Table 3 were sown each in fixed amounts, and coverd with a soil layer with a thickness of 1 cm.

Each of the test compounds was dissolved in a mixture of acetone and water (1:1) containing 0.2 % of Tween 20 and applied uniformly to the surface of the soil at each of the rates of application shown in Table 3.

Twenty-one days after the application, the herbicidal effect on the weeds and the degree of phytotoxicity to the crops were evaluated on the following standards described in Test Example 1. The results are shown in Table 3.

Table 3

| Compound No. | Rate of the active ingredient applied (g/ha) | Herbicidal effect | | | | | Phytotoxicity to crops | | | |
|---|---|---|---|---|---|---|---|---|---|---|
| | | A | O | B | C | D | K | L | M | N |
| 1 | 1000 | 100 | 100 | 100 | 100 | 100 | 0 | 0 | 0 | 0 |
| | 100 | 100 | 80 | 100 | 100 | 100 | 0 | 0 | 0 | 0 |
| | 30 | 100 | 20 | 100 | 100 | 100 | 0 | 0 | 0 | 0 |
| 4 | 1000 | 100 | 100 | 100 | 100 | 100 | 0 | 0 | 0 | 0 |
| | 100 | 100 | 70 | 100 | 100 | 100 | 0 | 0 | 0 | 0 |
| | 30 | 100 | 10 | 100 | 100 | 100 | 0 | 0 | 0 | 0 |
| 28 | 1000 | 100 | 100 | 100 | 100 | 100 | 0 | 0 | 0 | 0 |
| | 100 | 100 | 80 | 100 | 100 | 100 | 0 | 0 | 0 | 0 |
| | 30 | 100 | 20 | 100 | 100 | 100 | 0 | 0 | 0 | 0 |
| a | 1000 | 100 | 100 | 100 | 40 | 100 | 0 | 0 | 0 | 0 |
| | 100 | 80 | 80 | 100 | 0 | 80 | 0 | 0 | 0 | 0 |
| | 30 | 80 | 40 | 100 | 0 | 0 | 0 | 0 | 0 | 0 |
| b | 1000 | 100 | 100 | 100 | 100 | 100 | 0 | 0 | 0 | 0 |
| | 100 | 100 | 40 | 100 | 100 | 100 | 0 | 0 | 0 | 0 |
| | 30 | 0 | 0 | 0 | 0 | 0 | 0 | 0 | 0 | 0 |
| Non-treated | | 0 | 0 | 0 | 0 | 0 | 0 | 0 | 0 | 0 |

Note to Table 3

a and b in the columns of "Compound No." are the same as the footnote to Table 2.
O in the column of "Herbicidal effect" stands for giant foxtail.

**Claims**

1. A compound of the formula

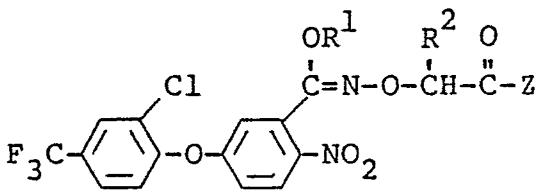

(I)

wherein

$R^1$ represents a lower alkyl group,

$R^2$ represents a hydrogen atom or a lower alkyl group, and

Z represents a group of the formula $-OR^3$ or $-SR^4$ in which $R^3$ represents a lower alkenyl or alkynyl group which may be substituted by halogen, cyano or lower alkoxycarbonyl, and $R^4$ represents a lower alkyl group.

2. The compound of claim 1 which is in syn-form.

3. The compound of claim 1 wherein $R^1$ is methyl and $R^2$ is hydrogen.

4. The compound of claim 1 wherein $R^3$ is allyl or propargyl, and $R^2$ is hydrogen.

5. The compound of claim 1 which is methyl O-allyloxycarbonylmethyl-5-(2-chloro 4-trifluoromethylphenoxy)-2-nitrobenzohydroximate, methyl O-propargyloxycarbonylmethyl-5-(2-chloro-4-trifluoromethylphenoxy)-2-nitrobenzohydroximate, methyl O-methylthiocarbonylmethyl5-(2-chloro-4-trifluoromethylphenoxy)-2-nitrobenzohydroximate, or methyl O-n-propylthiocarbonylmethyl-5-(2-chloro-4-trifluoromethylphenoxy)-2-nitrobenzohydroximate.

6. A process for producing the compound of formula (I) set forth in claim 1, which comprises

(a) reacting an ester-forming derivative of a compound of the formula

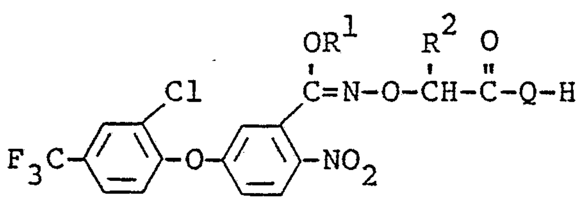

(II)

wherein $R^1$ and $R^2$ are as defined above, and

Q represents an oxygen or sulfur atom,

with a compound of formula

Z-H (III)

wherein Z is as defined above, or

(b) reacting the compound of formula (II) with a compound of the formula

$R^3X^1$ or $R^4X^1$ (IV)

wherein $R^3$ and $R^4$ are as defined above, and

$X^1$ represents a halogen atom, or

(c) reacting a compound of the formula

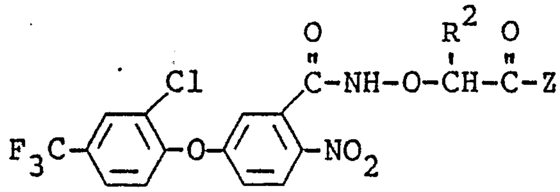

(V)

wherein $R^2$ and Z are as defined above,

with a compound of the formula

$R^1$-$X^2$ (VI)

wherein $R^1$ is as defined above, and

$X^2$ represents an acid residue,

or diazomethane.

7. A herbicidal composition comprising the compound of formula (I) set forth in claim 1 and an agriculturally and horticulturally acceptable carrier or diluent.

8. A herbicide containing a compound of formula (I) defined in claim 1.

9. A method of controlling weeds which comprises applying the compound of formula (I) set forth in claim 1 to the locus where the weeds are to be controlled, or to the weeds to be controlled.

10. Use of a compound of formula (I) defined in claim 1 as a herbicide.